# EUROPEAN PATENT APPLICATION

(11) **EP 1 443 618 A1**
(43) Date of publication of application: **04.08.2004**
(21) Application number: 04001311.2
(22) Date of filing: 22.01.2004
(51) Int. Cl.: H02B 1/04

(54) **Combined multifunctional middle voltage switchgear for middle voltage electric control panels**

(30) Priority: 24.01.2003 IT mi20030117
(71) Applicant: Apostolo, Carlo, 23807 Merate (LECCO) (IT); Danelli, Angelo, 20066 Melzo-Milano (IT)
(72) Inventor: Apostolo, Carlo, 23807 Merate (LECCO) (IT); Danelli, Angelo, 20066 Melzo-Milano (IT)
(74) Representative: Cicogna, Franco

(57) **Abstract**

The present invention relates to a combined multifunctional middle voltage apparatus for middle voltage electric control panels, comprising a supporting elements for insulted poles, coupled to a control casing including a driving shaft for driving an automatic breaker, a driving shaft for driving a line knife switch, and a driving shaft for a ground or earth knife switch.

In the control casing or box are moreover provided mechanic interlocking means between the automatic breaker and the line knife switch.

## Description

### BACKGROUND OF THE INVENTION

The present invention relates to a combined multifunctional middle voltage apparatus for middle voltage electric control panels.

As is known, in electric control panels of a middle voltage type and, in particular, of the metal enclosed type, are conventionally used automatic breakers provided with a side drive, which are housed in cells including a related line knife switch and, if required, current transformers and earth knife switches.

The automatic breaker is coupled to the line knife switch, the earth knife switch and current transformers which must necessarily have the required mechanical interlocking means for providing an interlocking between the operation of the breaker and that of the knife switches, to prevent false actuations from occurring; the mentioned mechanic interlocking means are conventionally used by interlocking key elements.

The above disclosed arrangements are very complex from a making standpoint and, moreover, require the use of particularly large spaces, with consequent assembling and installing difficulties.

### SUMMARY OF THE INVENTION

Accordingly, the aim of the present invention is to overcome the above mentioned drawbacks, by providing a combined multifunctional middle voltage apparatus for middle voltage electric control panels, allowing to make a very compact element which can be arranged in a single drive casing or box, together with the related mechanic interlocking means, which are made without using key interlocking devices.

Within the scope of the above mentioned aim, a main object of the present invention is to provide such a multifunctional middle voltage apparatus for metal enclosed control panels which is specifically designed for providing a IP20 protection between the top and bottom portion thereof, thereby providing a very practical and operatively flexible assembly.

Another object of the present invention is to provide such a combined apparatus allowing to easily see from the outside of the control panel, the opening and closing positions of the line knife switch blades, thereby providing a visible displaying of the switching function.

Another object of the present invention is to provide such a middle voltage apparatus which can be constructed with rated middle voltages of 12, 24 and 36 KV.

Another object of the present invention is to provide such an apparatus allowing to apply, in its insulating housing, toroidal current transformers of a low voltage type, or electronic current transformers.

Yet another object of the present invention is to provide such a middle voltage apparatus which includes a built-in mechanical system for locking the access door to the cell, which door can be opened only with an open line knife switch and a closed earth knife switch.

Yet another object of the present invention is to provide such a middle voltage apparatus allowing to make a cell including an automatic breaker having a size smaller than that of the automatic breakers which are at present commercially available, which can be easily associated with other cells of a switching type, and this with a very small building cost, since all the functional parts, such as the related drivers and locking means are already built-in in the apparatus.

According to one aspect of the present invention the above mentioned aim and objects, as well as yet other objects, which will become more apparent hereinafter, are achieved by a combined multifunctional middle voltage apparatus for middle voltage electric control panels, characterized in that said apparatus comprises a supporting element for supporting insulated poles coupled to a drive casing including a drive shaft for driving an automatic breaker and a drive shaft for driving a line knife switch, in said drive casing being moreover provided mechanical interlocking means between said automatic breaker and line knife switch.

### BRIEF DESCRIPTION OF THE DRAWINGS

Further characteristics and advantages of the present invention will become more apparent from the following detailed disclosure of a preferred, though not exclusive, embodiment of a combined multifunctional middle voltage apparatus for middle voltage electric control panels, which is illustrated, by way of an indicative, but not limitative, example, in the accompanying drawings, where:

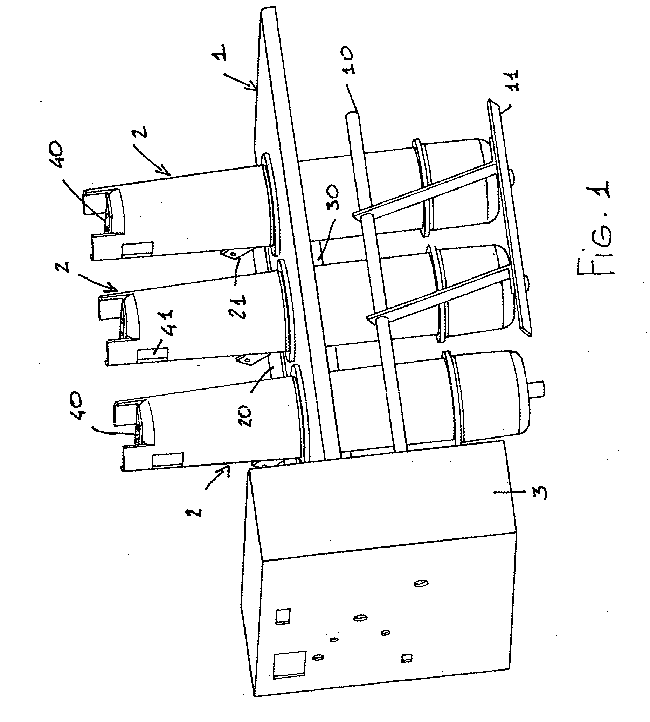

Figure 1 is a side perspective view illustrating the apparatus according to the invention;
Figure 2 is another side perspective view, taken from the other side, of the apparatus according to the present invention;
Figure 3 is a further perspective view illustrating a pole of the apparatus;
Figure 4 illustrates a pole of the apparatus with different methods or types for applying a current transformer, and without any current transformer;

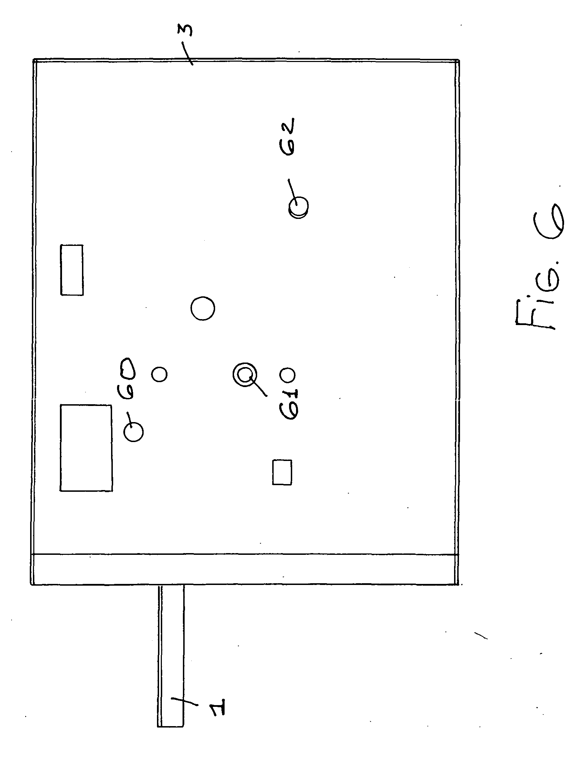

Figure 5 is a further perspective view illustrating the drive casing or box of the apparatus with three shafts, respectively for driving the opening and closing movements of the line knife switch, the automatic breaker and the earth knife switch; and
Figure 6 is a front view illustrating the drive casing or box of the apparatus.

### DESCRIPTION OF THE PREFERRED EMBODIMENTS

With reference to the number references of the above mentioned figures, the combined multifunctional middle voltage apparatus for middle voltage electric control panels according to the present invention, comprises a supporting element 1, which is made of a metal material, and has substantially a plate-like shape, and being provided for operating as a supporting element for insulated poles, generally provided in a number of three, and which has been generally indicated by the reference number 2.

The supporting element 1 is coupled to a drive casing or box 3, of substantially parallelepipedal shape.

The metal supporting element 1 is designed for operating as a segregating element between the bus bar region and the breaker cell region.

In order to drive the apparatus, a drive shaft 10 for driving the earth knife switch operating on the earthing blades 11 is provided.

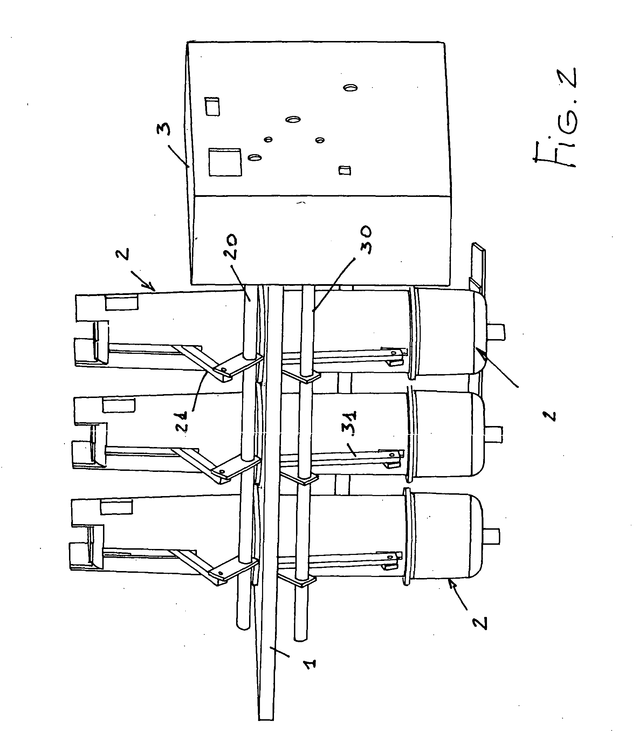

With reference to figure 2, it is possible to show herein the drive shaft 20 for driving the line knife switch, which is also coupled to the drive casing or box 3 and being associated to a linkage assembly 21, coupled to the related poles 2.

The assembly further comprises, under the plate 1, on a side opposite to the drive shaft 10, a further drive shaft for opening and closing the breaker 30, which is coupled to the linkage elements 31 providing a connection with the poles 2.

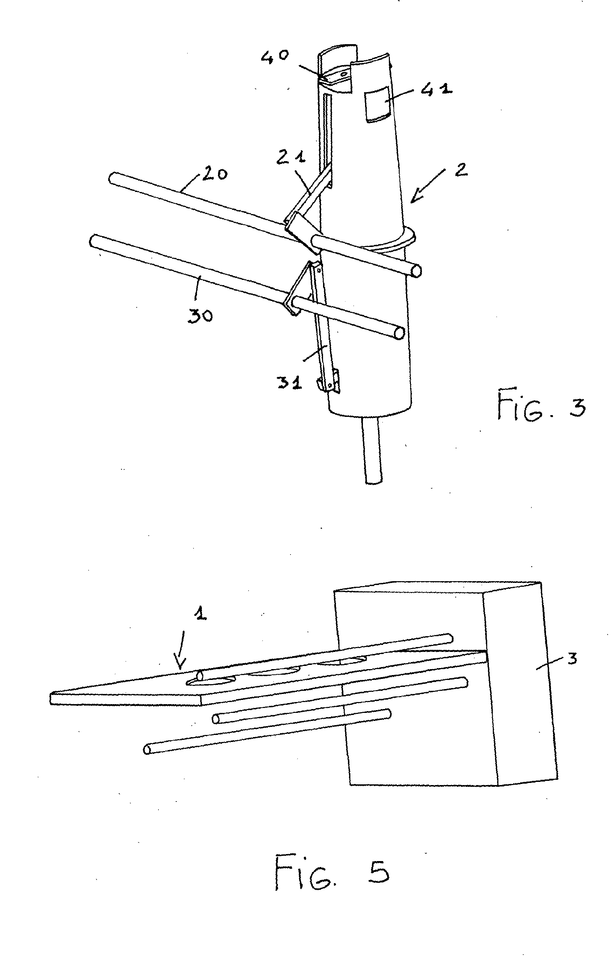

Each pole 2, as clearly shown in figure 3, comprises a supporting element 40 operating as a support for the connection of the coupling bars of the head bars and as a plug-in arrangement for the line knife switch.

For knife switches of a knee lever or pantograph type, is provided a window arrangement 41, allowing to visually monitor the closure condition of the line knife switch blades, thereby rendering visible the sectioning operation.

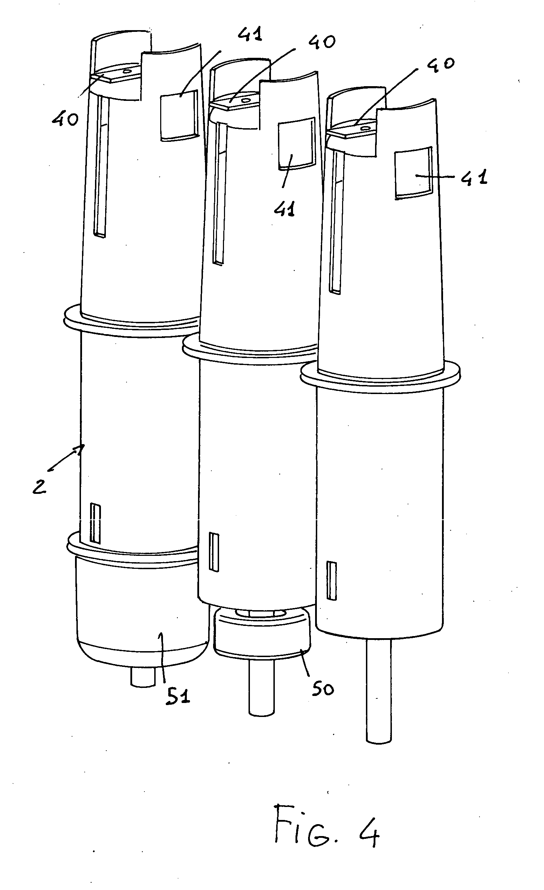

As is schematically shown in figure 4, each pole 2 can comprise a current reducing unit, of a low voltage type, generally indicated by the reference number 50 and applied to the central pole of figure 4.

The current reducing unit 50, in particular, can be omitted, as is shown on the right pole of figure 4, and being housed inside an insulating covering 51, as is shown for the left pole.

It would be however possible to apply existing current reducing unit inside the cell and then connect said units to the apparatus.

The drive casing or box, as is clearly shown in figure 6, comprises a drive for the line knife switch, indicated by 60, a breaker drive, indicated by 61, and an earth knife switch drive, indicated by 62.

Said drive casing or box, moreover, comprises all the indicating or signalling elements as conventionally included in available breakers.

Thus, in the apparatus according to the present invention, the actuating and disactuating operations will be interlocked with one another, to provide a set fixed drive sequence of the cell; in fact, to operate the cell, it is necessary to perform at first the opening of the earth knife switch, then perform the closing of the line knife switch and, finally, the closing or closure of the automatic breaker.

With the automatic breaker in a closed condition, it would be impossible to operate the line and earth knife switches.

For putting the cell in an off condition, it would be necessary to perform at first the opening of the automatic breaker, then the opening of the line knife switch and finally the closing of the earth knife switch.

The closure of the earth knife switch will clear, through the mechanical locking means applied to the bottom part of the drive, the opening of the cell door.

That same mechanical locking means would not allow to open the earth knife switch with the cell door in an open condition.

Then, on the apparatus according to the present invention, will be assembled all the mechanical blocks necessary for providing safe operations and for protecting the operating personnel, as typical in a middle voltage cell.

Moreover, it would be possible to apply, for each handling or driving operation, key blocks, to provide an intercoupling with other functionally depending cells, to provide in turn an optimum protection of the operating personnel.

The automatic breaker drive will comprise moreover all the components of commercially available automatic breakers, and would provide all the performance operations as those provided by conventional automatic breakers.

In particular, on the outer portion thereof, it would be possible to perform a manual spring reloading operating, and will be also provided opening and closing push-buttons, opening, closing and loaded spring indicating elements, as well as an operation or handling counter.

In addition to the drives and signallings typical of an automatic breaker, it will be possible to properly operate the line knife breaker and earth knife breaker, with a possibility of applying key blocks for safely controlling other functionally dependent cells or systems.

Moreover, the drive will be also provided with opening and closing status indicating elements, related to the two knife switches.

On the top portion of the drive will be arranged, so as to allow it to be engaged in the low voltage cell, the terminal block including the auxiliary connections (of low voltage) and, in particular, but not limitatedly, for automatically or power driving the breaker, for tele-controlling it, by opening and closing coils, auxiliary contacts for said breaker and two knife switches, in addition to the other connections and toroidal or electronic current transformer to be optionally installed on the poles of the apparatus.

From the above disclosure it should be apparent that the invention fully achieves the intended aim and objects.

In particular, it is to be pointed out that the invention provides a combined middle or intermediate voltage apparatus, which is very practical and functional and which, moreover, can greatly simplify all the assembling operations, in addition to increasing the operating safety.

The invention, as disclosed, is susceptible to several modifications and variations, all of which will come within the scope of the inventive idea.

Moreover, all the constructional details can be replaced by other technically equivalent elements.

In practicing the invention, the used materials, as well as the contingent size and shapes, can be any, according to requirements.

## Claims

1. A combined multifunctional middle voltage apparatus for middle voltage electric control panels, **characterized in that** said apparatus comprises a supporting element for supporting insulated poles coupled to a drive casing including a drive shaft for driving an automatic breaker and a drive shaft for driving a line knife switch, in said drive casing being moreover provided mechanical interlocking means between said automatic breaker and line knife switch.

2. A combined apparatus, according to the preceding claim, **characterized in that** said combined apparatus comprises a drive shaft for driving the earth knife switch.

3. A combined apparatus, according to the preceding claims, **characterized in that** said supporting element operates as a segregating element between the bus bar region and the breaker cell region.

4. A combined apparatus, according to one or more of the preceding claims, **characterized in that** said drive shaft for driving said earth knife switch is operatively coupled to the earthing blades.

5. A combined apparatus, according to one or more of the preceding claims, **characterized in that** said drive shaft for driving said line knife switch is coupled to drive linkage arrangements.

6. A combined apparatus, according to one or more of the preceding claims, **characterized in that** said drive shaft for driving said automatic breaker is coupled to a linkage arrangement.

7. A combined apparatus, according to one or more of the preceding claims, **characterized in that** said combined apparatus comprises moreover visual control means for visually monitoring the closing position of the line knife switch blades.

8. A combined apparatus, according to one or more of the preceding claims, **characterized in that** said combined apparatus comprises interlocking means between said automatic breaker, line knife switch and earth knife switch, said interlocking means being free of control keys.

9. A combined apparatus, according to one or more of the preceding claims, **characterized in that** said combined apparatus allows to apply current switches of a low voltage or electronic type inside a built-in insulating casing.

10. A combined apparatus, according to one or more of the preceding claims, **characterized in that** said combined apparatus comprises an insulating covering arranged above a current reducing unit.

11. A combined multifunctional middle voltage apparatus for middle voltage electric control panels, according to one or more of the preceding claims, and substantially as broadly disclosed and illustrated and for the intended aim and objects.
